# FASCICULE DE BREVET EUROPEEN

(11) **EP 0 474 573 B1**
(45) Date de publication et mention de la délivrance du brevet: **17.05.1995**
(21) Numéro de dépôt: 91440059.3
(22) Date de dépôt: 19.07.1991
(51) Int. Cl.: C22B 1/00, B03B 9/06

(54) **Procédé d'enrichissement des fines magnétiques de coproduits ferreux issus de la production sidérurgique et installation destinée à le mettre en oeuvre**
Verfahren und Einrichtung zum Anreichern magnetischer Teilchen aus eisenhaltigen Abfallstoffen der Eisen- und Stahlherstellung
Process and installation for upgrading magnetic fines from ferruginous wastes resulting from the making of iron and steel

(30) Priorité: 31.07.1990 FR 9009935
(43) Date de publication de la demande: 11.03.1992
(73) Titulaire: METALSIDER, F-57130 Jouy-aux-Arches (FR)
(72) Inventeur: Gans, Jacques René, F-57000 Metz (FR)
(74) Mandataire: Metz, Paul

(56) Documents cités:
- FR-A- 2 354 817
- US-A- 4 034 861

## Description

La présente invention se rapporte à un procédé d'enrichissement des fines magnétiques provenant de récupération dans certains coproduits ferreux issus de la production sidérurgique ou de fonderies et à l'installation destinée à mettre en oeuvre ce procédé.

De la production de la fonte et de l'acier par voie de fusion de minerai, d'agglomérés de minerai, de produits contenant du fer, ainsi que de l'affinage du métal obtenu par l'adjonction de divers produits d'addition dont des minéraux, se traduit en sidérurgie et en fonderie, par la production de différents déchets sidérurgiques appelés coproduits.

La teneur résiduelle en fer de certains coproduits permet leur traitement économique en vue d'en retirer des concentrés réutilisables dans le circuit de fabrication de la fonte et/ou de l'acier.

La récupération des concentrés ferreux contenus dans les coproduits de fabrication de la fonte et de l'acier se fait habituellement par voie de triage magnétique suivi d'une sélection granulométrique des concentrés ferreux par criblage mécanique afin d'en faciliter le recyclage par voie de fusion ou d'agglomération (voir par exemple FR-A-2 354 817).

On peut ainsi extraire des coproduits de sidérurgie ou de fonderie des fines magnétiques de granulométrie 0-10 mm dont la teneur de base en fer se situe généralement aux environs de 30 %.

La faible teneur relative de ces fines en fer nécessite un traitement complémentaire d'enrichissement de ces matières.

Celui-ci comporte habituellement un triage magnétique spécifique des fines ferreuses à l'aide d'un ou de plusieurs électro-aimants disposés localement dans la cinématique de traitement, préférentiellement au-dessus d'une bande transporteuse sur laquelle circule en continu la matière à enrichir.

Les électro-aimants sont équipés de dispositifs d'évacuation transversaux ou longitudinaux des matières attirées par l'effet des champs magnétiques pendant leur passage dans la zone d'attraction.

Le réglage de l'intensité d'attraction sur le flux des matériaux fins en transit permet en principe d'obtenir la teneur en fer souhaitée pour ce qui est des produits ainsi sélectionnés.

Malheureusement, l'épaisseur inévitable de la masse circulant sur la bande transporteuse ainsi que le manque d'homogénéité de la matière a pour effet de ne pas soumettre tous les grains à une intensité d'attraction identique.

D'autre part, la force de l'attraction magnétique est affaiblie pour les grains de la couche inférieure par le poids de la matière se trouvant en surface.

Pour ces raisons, le rendement de l'enrichissement ainsi opéré s'avère faible et peu intéressant sur le plan technico-économique. Il en est de même sur le plan énergétique.

On peut ainsi citer une récupération de 25 % de fines à teneur en fer de 50 % sur une masse traitée à teneur en fer de 30 %, soit un rebut de 75 % en volume titrant 23 % de fer.

En ce qui concerne l'environnement, le triage magnétique classique des coproduits sidérurgiques et/ou de fonderie se caractérise par des émanations très importantes de poussières.

On ne peut remédier à ce phénomène que par la mise en place d'importantes installations de dépoussiérage dont l'investissement, l'entretien et le coût énergétique ont une incidence déterminante sur le prix de revient des produits récupérés.

La présente invention a pour but de remédier à ces divers inconvénients en proposant un procédé et une installation, tels que définis dans les revendications 1 et 6 respectivement, pour le traitement des coproduits issus de la production sidérurgique ou de fonderie, et pour l'enrichissement des produits magnétiques obtenus après récupération.

Les revendications 2 à 5 concernent des modes de réalisation préférés du procédé.

Ce procédé se montre remarquable par ses résultats techniques, par sa facilité de mise en oeuvre et par une meilleure protection de l'environnement.

Les coproduits sont entreposés dès leur arrivée sur le site d'exploitation et humidifiés par arrosage dosé de la matière.

Cette opération a pour but de stabiliser les ultra-fins contenus dans la matière et d'en éviter la propagation au cours des opérations de manutentions suivantes.

On obtient ainsi une masse dont on complétera l'humidification dès introduction dans la chaîne de traitement qui comporte :
. une sélection granulométrique avant introduction dans la cinématique de triage,
. un triage magnétique primaire de la masse des coproduits humidifiés,
. une sélection granulométrique primaire des produits magnétiques obtenus,
. un ensemble de traitement par criblage mécanique, par sélection densito-granulométrique, le tout sous voie humide.

Outre l'avantage d'éliminer la pollution atmosphérique, le procédé de traitement des coproduits sidérurgiques selon l'invention présente les nombreux avantages suivants :
. procédé complet, facile à mettre en oeuvre ;
. faible dépense énergétique de mise en oeuvre ;
. haute teneur en fer et grande qualité du produit résultant ;
. rendement industriel important ;
. obtention de produits de granulométrie constante et fiable permettant une réutilisation particulièrement économique dans le circuit de production de la fonte et/ou de l'acier.
. la qualité des produits de récupération permet pour une partie de ces derniers (fraction granulométrique 3-10 mm) un recyclage en hauts fourneaux, alors que dans les procédés classiques cette fraction granulométrique est actuellement recyclée sous la forme d'agglomérés.

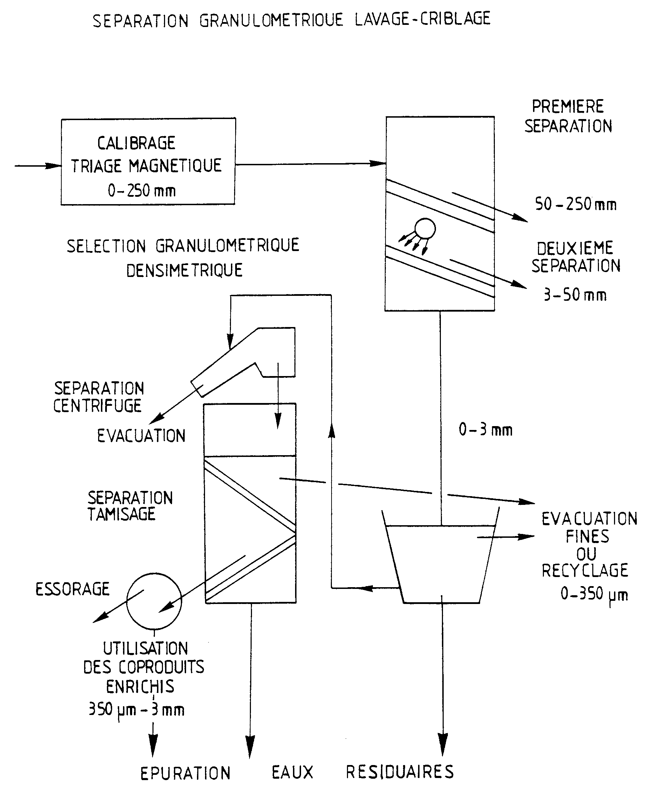

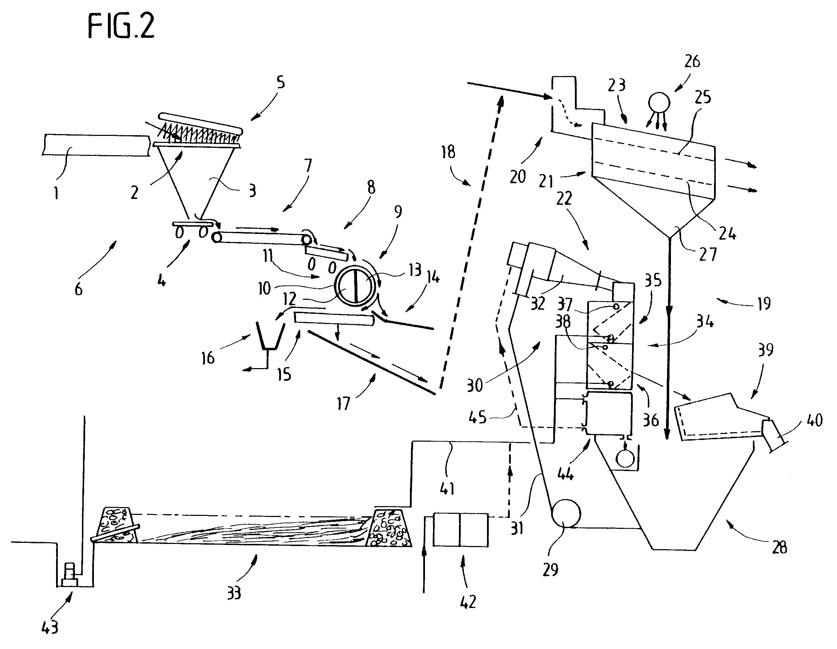

La présente invention sera bien comprise à la lecture de la description qui suit, effectuée à titre d'exemple non limitatif sur un mode d'exécution en référence aux dessins accompagnants dans lesquels :
. la figure 1 est le schéma général illustrant l'organigramme du procédé complet selon l'invention ;
. la figure 2 est une vue schématique d'ensemble de l'installation.

Le principe général appliqué dans cette invention consiste à enrichir en fer des fines magnétiques récupérées dans des coproduits sidérurgiques ou de fonderies par séparation densimétrique et granulométrique sous voie humide.

Selon l'invention, on peut réaliser ainsi un enrichissement allant jusqu'à 60 % en fer pour la partie recyclable fine.

Il en résulte une notable diminution de la teneur en fer des déchets non exploitables issus de l'enrichissement des fines traitées.

Grâce à l'humidification de 5 à 10 % des coproduits bruts avant leur introduction dans la cinématique de traitement, le procédé préserve l'environnement et, simultanément, ne présente pas de risque de colmatage au niveau des appareils de traitement mécanique et de criblage-tamisage, ceci s'effectuant par la voie humide pour la partie la plus sensible.

Ainsi se trouve réglé le problème de la pollution habituellement engendrée par ce type d'installation.

On décrira ci-après simultanément l'installation et le procédé en référence aux figures.

Les coproduits ferreux bruts sont entreposés sur le chantier de traitement de manière à permettre une pré-humidification par voie d'arrosage alternatif des stocks.

Les matières sont reprises d'entreposage et déchargées et à partir d'un quai 1 sur une grille de séparation primaire 2 disposée sur le haut d'une trémie 3 sous laquelle un extracteur vibrant 4 à débit variable extrait les produits bruts calibrés à 0-250 mm par la grille de séparation primaire 2.

Un dispositif de pulvérisation d'eau 5, placé à l'entrée de l'installation, permet de compléter l'humidification de la matière.

L'ensemble constitue la première partie d'un premier bloc de séparation 6.

Les produits extraits sont transférés ensuite par une bande transporteuse 7 sur une table vibrante 8 dont l'extrémité est constituée de métal amagnétique alimentant un trieur magnétique 9 à enveloppe tournante 10 en rotation constante autour d'un cylindre 11 à deux demi-volumes accolés 12 et 13 dont l'un d'entre eux, par exemple le demi-volume 13, est constitué par un électroaimant.

L'enveloppe tournante 10 est pourvue par exemple de barres longitudinales de séparation la fractionnant en espaces successifs.

Les matières amagnétiques sont évacuées par la force centrifuge due à la rotation de l'enveloppe tournante 10 et chutent par gravité dans une goulotte 14 placée sous l'enveloppe tournante de laquelle elles sont reprises en vue de leur mise à la décharge.

Les composantes à caractère magnétique sont emportées par l'enveloppe tournante 10 jusqu'à la limite du volume magnétique au-delà duquel l'attraction magnétique diminue pour s'annuler, précipitant les produits vers le bas sur un crible de calibration primaire 15.

Ce crible 15 a pour but d'établir une coupure granulométrique à 50 mm des matières magnétiques de granulométrie 0-250 mm.

Les produits magnétiques de granulométrie 50-250 mm sont évacués par une goulotte 16 hors du circuit de traitement pour être recyclés en l'état par voie de fusion en aciérie ou hauts fourneaux.

On rappelle que le traitement global par voie humide appliqué ici consiste à humidifier dès l'entrée, c'est-à-dire dès leur déchargement, les matières contenant des coproduits ferreux, remplissant ainsi, dès leur première manipulation, les conditions élémentaires de non-pollution atmosphérique par particules et poussières.

Les produits magnétiques de fraction 0-50 mm issus du criblage primaire sont amenés par une double bande transporteuse 17, 18 vers une unité principale de séparation 19 par voie humide décrite ci-après.

Les coproduits ferreux venus du premier bloc de séparation 6 à triage magnétique, sont admis dans un sas d'alimentation 20 dans l'unité principale de séparation 19 comprenant un module dit de séparation 21 et un module de sélection 22.

Les organes d'humidification sont représentés symboliquement sur les dessins par des rampes de pulvérisation. Il est bien entendu qu'il ne s'agit que d'une commodité de dessin couvrant tous moyens équivalents.

Le premier module de séparation 21 comprend un crible de séparation 23 présentant au moins un plan séparateur 24 ou 25 qui a pour but de réaliser au moins une séparation granulométrique par lavage-criblage intensif, sous projection d'eau sous pression, délivrée par exemple par des rampes supérieures telles que 26, formant un ou plusieurs rideaux d'eau .

L'eau sous pression est projetée contre la matière se déplaçant sur la surface de criblage constituée au moins d'un plan incliné à mailles permettant une séparation à 3 mm. La matière est entraînée le long de la surface du plan du crible par l'effet d'inclinaison de ce dernier ainsi que par un mouvement vibratoire.

Seront issues de la première séparation par voie humide les matières :
. magnétiques lavées de granulométrie 3-50 mm
. de granulométrie 0-3 mm issues du lavage-criblage.

Les matières magnétiques de granulométrie 3-50mm sont évacuées hors de l'ensemble de traitement 27.

Ces matières, riches en fer, peuvent être recyclées par voie de fusion en aciérie ou hauts fourneaux.

Les matières de granulométrie 0-3 mm ayant traversées le ou les plan(s) de criblage 24 ou 25 sont emportées à travers un collecteur 27 par un courant vertical dans une cuve tampon 28 où elles se retrouvent dans la masse totale du liquide qui a servi à la première opération de lavage-criblage.

La masse ainsi constituée est entraînée par une pompe 29 vers un étage 30 de sélection densito-granulométrique par séparation centrifuge suivie d'une séparation par tamisage.

A cet effet, elles sont reprises de la cuve 28 par un circuit de recyclage 31 comprenant la pompe 29 pour être injectées dans un séparateur centrifuge incliné 32, par exemple du type cyclone, dans lequel l'eau ainsi que les produits légers et les plus fins, c'est-à-dire à teneur en fer les plus faibles, sont évacués vers le haut puis dirigés vers un ou des bassin(s) de décantation 33 des eaux chargées.

Le réglage du séparateur centrifuge permettra d'obtenir la sélection souhaitée au niveau de la teneur en fer située à 45 % environ.

Les produits les plus riches issus du séparateur sont déversés dans un ensemble de tamisage 34 par exemple à deux étages 35 et 36 comprenant des tamis à mailles sélectives, arrosés en permanence par des rideaux d'eau provenant des rampes de pulvérisation 37 et 38. Les tamis sont, par exemple, animés de mouvements alternatifs de manière à réaliser pour chacun un travail de lavage-séparation sans colmatage.

La matière ainsi séparée se divise en deux flux:
. les fines humides de granulométrie comprise entre 350 »m et 3 mm ;
. un liquide chargé à base d'eau et de poussières de granulométrie 0-350 »m.

Les produits magnétiques de granulométrie 350»m-3mm tels qu'enrichis par la sélection densito-granulométrique par voie humide issus du tamisage sont dirigés vers un bloc d'essorage 39 permettant d'en diminuer la teneur en eau.

Après égouttage puis essorage, les produits magnétiques semi humides à teneur garantie en fer d'au moins 60 % sortent en 40 pour être recyclés dans une installation du type agglomération.

La récupération des eaux et des produits traversants est assurée par des collecteurs, emportant avec l'eau, par un circuit de sortie 41, les matières les plus fines de granulométrie 0-350 »m, considérées comme non valorisables.

Un préparateur-doseur 42 de floculant injecte une matière floculante dans le circuit d'évacuation 41 pour faciliter la décantation dans le ou les bassins 33.

Après filtrage, l'eau claire du ou des bassins de décantation 33 est récupérée dans un collecteur et renvoyée par une pompe de reprise 43 dans l'installation.

Cette dernière fonctionne ainsi en cycle fermé ne nécessitant qu'une simple addition d'eau complémentaire. Elle évite donc toute pollution par voie humide et toute consommation excessive d'eau.

L'eau et les matières fines sortant du séparateur centrifuge retournent par reflux dans un caisson-collecteur 44 et rejoignent le séparateur centrifuge par un circuit de recyclage 45 ou le circuit d'évacuation 45.

Ainsi est réalisée une opération qui se caractérise par une utilisation minimale d'eau sans rejet liquide à l'extérieur évitant ainsi toute pollution.

L'ensemble des opérations s'effectuant sur produits humidifiés, soit sous rideaux d'eau, le procédé selon l'invention ne génère aucune pollution atmosphérique.

De plus, le procédé permet un recyclage plus économique des produits de récupération magnétique. Il est possible par exemple de recycler en charge d'additions pour hauts fourneaux, la fraction granulométrique 3 - 10 mm alors que dans les procédés classiques, cette fraction est habituellement consommée en agglomération de minerai, ou en amont de la fusion.

L'invention a été décrite ci-dessus en détail. Il est bien entendu qu'elle ne saurait se limiter aux seuls moyens décrits.

## Revendications

1. Procédé d'enrichissement des fines magnétiques provenant de récupération dans des coproduits ferreux issus de la production sidérurgique ou de fonderie, caractérisé en ce que l'on procède à :
. un enrichissement en fer des matières fines par une humidification des produits bruts dès leur introduction dans la chaîne de traitement,
. un tri magnétique,
. plusieurs sélections granulométriques successives des coproduits ferreux dont une calibration avec triage magnétique et plusieurs sélections granulométriques densimétriques par voie humide dans une unité principale de séparation dans laquelle on élimine par voie humide la fraction granulométrique la plus faible de 0-350»m pour récupérer des coproduits enrichis dans la gamme granulométrique 350»m-3mm.

2. Procédé selon la revendication 1 caractérisé en ce que l'on procède par une première séparation-sélection magnétique dite de calibration entre un quai de déchargement (1) et l'unité principale de séparation (19) par un premier bloc de séparation à triage magnétique (6) à travers une grille puis un trieur magnétique d'où les produits triés et calibrés à 0-250mm sont acheminés vers un deuxième bloc de séparation de l'unité principale.

3. Procédé selon les revendications 1 et 2 caractérisé en ce que la séparation principale s'effectue par un module de séparation et un module de sélection :
. la séparation étant une double séparation granulométrique par lavage-criblage dont la première est sèche et la deuxième sous rideau vertical d'eau sur plans oscillants,
. la sélection étant une sélection granulométrique densimétrique par le deuxième module reprenant les coproduits lavé-criblés pour les séparer par centrifugation puis tamisage-arrosage avec évacuation de la fraction granulométrique la plus faible.

4. Procédé selon les revendications 1, 2 et 3 caractérisé en ce que la première séparation s'effectue par un premier tri à 50 mm de coupure sur un premier plan incliné à sortie 50-250 mm suivie d'une deuxième séparation par un deuxième tri à 3 mm de coupure sur un deuxième plan incliné à sortie 3-50mm.

5. Procédé selon les revendications 1, 2, 3 et 4 caractérisé en ce que la sélection granulométrique s'effectue dans un séparateur centrifuge et est suivie d'un tamisage en deux étages par panneaux tamiseurs arrosés en deux étages d'un pouvoir de coupure limité à 350 »m.

6. Installation industrielle destinée à la mise en oeuvre du procédé d'enrichissement en fines magnétiques dans des coproduits ferreux issus de la production sidérurgique ou de fonderie selon les revendications précédentes, caractérisée en ce qu'elle se compose d'un premier bloc de séparation formé d'une grille (2) disposée sous un rampe de pulvérisation (5) disposée sur le haut d'une trémie (3) alimentant un extracteur vibrant (4) suivi par une table vibrante (8) alimentant un trieur magnétique (9) puis un crible (15), qu'elle se compose, en outre, d'une unité principale de séparation (19) se partageant en un module de séparation (21) réalisant les séparations granulométriques successives nécessaires par voie humide dont une première et deuxième séparation granulométrique par lavage-criblage sur deux plans inclinés (24, 25) suivi d'un module de sélection (22) dans lequel s'effectue une sélection granulométrique densimétrique en deux phases, par centrifugation dans un séparateur centrifuge (32) suivie d'une sélection par tamisage-arrosage par deux tamis (35, 36) en étages puis essorage, les deux modules étant séparés par une cuve servant de tampon.

## Claims

1. Process for concentrating magnetic fines, originating from reclamation in ferrous coproducts resulting from iron and steel making or casting, characterised in that:
· a concentration of iron in the fines materials is performed by means of wetting the raw products as soon as they are introduced into the processing sequence;
· a magnetic grading is performed;
· several successive granulometric selections of the ferrous coproducts are performed, including a calibration using a magnetic grading and several densitometric granulometric selection processes by the wet method in a principal separating unit in which the lowest granulometric fraction of 0 to 350 »m is removed by the wet method to recover concentrated coproducts in the granulometric range of 350 »m to 3 mm.

2. Process according to Claim 1,
characterised in that a first magnetic separation/selection process, called calibration, is performed between a discharge platform (1) and the principal separation unit (19) by a first separation block with magnetic grading (6) through a grid, and then a magnetic grader from where graded and calibrated products of 0 to 250 mm are conducted towards a second separating block of the principal unit.

3. Process according to Claims 1 and 2, characterised in that the principal separation is performed by means of a separating module and a selection module:
· the separation being a double granulometric separation by means of washing/sifting, of which the first is dry and the second is under a vertical water curtain on oscillating surfaces;
· the selection being a densitometric granulometric selection using the second module which recovers the washed/sifted coproducts in order to separate them using centrifuging and subsequent sieving/diffusing with removal of the lowest granulometric fraction.

4. Process according to Claims 1, 2 and 3, characterised in that the first separation is performed by a first grading with a gap of 50 mm on a first slanting surface having outlets of 50 to 250 mm, followed by a second separation by means of a second grading with a gap of 3 mm on a second slanting surface having outlets of from 3 to 50 mm.

5. Process according to Claims 1, 2, 3 and 4, characterised in that the granulometric selection is performed in a centrifuging separator and is followed by a sieving in two stages by means of sieving panels which are wetted in two stages and have a gap width which is restricted to 350 »m.

6. Industrial installation intended to perform the process of concentrating magnetic fines in ferrous coproducts resulting from iron and steel making or casting, according to the preceding claims, characterised in that it consists of a first separation block formed of a grid (2) disposed below a pulverisation ramp (5), disposed on the top of a hopper (3), supplying a vibrating extractor (4) followed by a vibrating table (8) supplying a magnetic grader (9), and then a sifter (15); and in that it furthermore comprises a principal separation unit (19) which is subdivided into a separating module (21) performing the necessary successive granulometric separations by the wet method, including a first and a second granulometric separation by means of washing/sifting on two slanting surfaces (24, 25) followed by a selection module (22) in which a densitometric granulometric selection is performed in two stages, by centrifuging in a centrifuging separator (32) followed by a selection, by means of sieving/diffusion by means of two sieves (35, 36) in stages and then drying, the two modules being separated by a vessel acting as a plug.

## Patentansprüche

1. Verfahren zum Anreichern magnetischer Teilchen aus wiedergewonnenen eisenhaltigen Nebenprodukten der Eisen- und Stahlherstellung sowie Gießerei, gekennzeichnet durch folgende Schritte:
- Anreichern des Eisens der feinen Materialien durch Befeuchten der Rohprodukte ab ihrem Eintritt in die Bearbeitungskette,
- magnetisches Sortieren,
- mehrfaches aufeinanderfolgendes Auslesen der eisenhaltigen Nebenprodukte in feuchtem Zustand unter Korngrößentrennung mit magnetischer Sortierung und mehrmaliges Auslesen nach Korngrößen und Dichten in einer Haupttrenneinheit, in der die Teilchen mit den kleinsten Korngrößen von 0-350 »m durch Befeuchten entfernt werden, um angereicherte Nebenprodukte im Korngrößenbereich von 350 »m bis 3 mm zurückzugewinnen.

2. Verfahren nach Anspruch 1, gekennzeichnet durch ein erstes magnetisches Trenn-Auslesen, genannt Klassifizieren, zwischen einer Laderampe (1) und der Haupttrenneinheit (19) durch einen ersten Trennblock zum magnetischen Sortieren (6) durch ein Gitter hindurch, danach durch einen magnetischen Scheider, von dem die sortierten und ausgelesenen 0-250-mm-Produkte zu einem zweiten Trennblock der Haupteinheit gefördert werden.

3. Verfahren nach Anspruch 1 oder 2, dadurch gekennzeichnet, daß
das Haupttrennen durch ein Trennmodul und ein Auslesemodul erfolgt, wobei das Trennen ein zweifaches Korngrößentrennen durch Waschen und Sieben ist, von dem das erste trocken und das zweite unter einem vertikalen Wasservorhang auf schwingenden Ebenen erfolgt, und
das Auslesen ein Korngrößen-Dichte-Auslesen durch das zweite Modul ist, das die gewaschenen und gesiebten Nebenprodukte wieder aufnimmt, um sie durch Schleudern und anschließendes Sieben und Besprühen unter Entfernen der kleinsten Korngrößen-Fraktion zu trennen.

4. Verfahren nach einem der Ansprüche 1, 2 oder 3, gekennzeichnet durch ein erstes Trennen mittels eines magnetischen Sortierens mit einer Trenngrenze bei 50 mm auf einer ersten geneigten Fläche mit einem 50 bis 250 mm-Ausgang, gefolgt von einem zweiten Trennen mittels eines zweiten Sortierens mit einer Trenngrenze von 3 mm auf einer zweiten geneigten Fläche mit einem 3 bis 50 mm-Ausgang.

5. Verfahren nach einem der Ansprüche 1, 2, 3 oder 4, dadurch gekennzeichnet, daß das Korngrößenauslesen in einem Schleudertrenner erfolgt und dann ein Sieben in zwei Stufen durch übereinander angeordnete Siebplatten mit einem auf 350 »m begrenzten Trennungsvermögen erfolgt.

6. Industrielle Anlage zur Anwendung des Verfahrens zum Anreichern magnetischer Teilchen aus eisenhaltigen Nebenprodukten der Eisen- und Stahlherstellung sowie Gießerei nach einem der vorangehenden Ansprüche, dadurch gekennzeichnet, daß sie einen ersten durch ein Gitter (2) gebildeten Trennblock aufweist, der unter einer schiefen Ebene (5) zur Pulverisierung und über einem Zuführtrichter (3) angeordnet ist, der einen Schwingscheider (4) speist, dem ein Rütteltisch (8), der einen Magnetscheider (9) speist, und ein Sieb (15) folgt, daß sie außerdem eine Haupttrenneinheit (19) aufweist, die unterteilt ist in ein Trennmodul (21), das die notwendigen aufeinanderfolgenden Korngrößentrennungen mit einem ersten und einem zweiten Korngrößentrennen durch Waschen und Sieben auf zwei schiefen Ebenen (24, 25) bewirkt, und ein nachfolgendes Auslesemodul (22), in welchem eine Korngrößen-Dichte-Auslese in zwei Phasen durch Schleudern in einem Zentrifugaltrenner (32) erfolgt, dem ein Auslesen durch Sieben und Besprühen durch zwei übereinander angeordnete Siebe (35, 36) und schließlich ein Trocknen folgt, wobei die zwei Module durch eine Wanne, die als Puffer dient, getrennt sind.
